(19) Europäisches Patentamt

European Patent Office

Office européen des brevets

(11) **EP 1 986 032 A1**

(12) **EUROPEAN PATENT APPLICATION**

(43) Date of publication:
29.10.2008 Bulletin 2008/44

(51) Int Cl.:
*G02B 26/08* (2006.01)   *G02B 26/10* (2006.01)
*F41G 3/06* (2006.01)   *G01S 17/89* (2006.01)

(21) Application number: 07106944.7

(22) Date of filing: 25.04.2007

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK RS

(71) Applicant: SAAB AB
581 88 Linköping (SE)

(72) Inventor: **Nilsson, Bernt**
**561 48, HUSKVARNA (SE)**

(74) Representative: **Norberg, Charlotte**
**Albihns AB**
**P.O. Box 5581**
**114 85 Stockholm (SE)**

(54) **Optical scanner**

(57)   The present invention relates to an optical scanner (300) for providing a deviation of electromagnetic radiation wherein the deviation varies in time, the optical scanner comprising at least a first Risley pair (100i) having a first pair of optical elements (105a, 105b) and a second Risley pair (100ii) having a second pair of optical elements (105c, 105d), wherein the optical elements (100a, 100b) in the first Risley pair are arranged to counter-rotate at a first rotation rate; and the optical elements (100c, 100d) of the second Risley pair are arranged to counter-rotate at a second rotation rate in a manner so that a desired time dependency of the deviation of the radiation is obtained.

## Fig. 4

Printed by Jouve, 75001 PARIS (FR)

**Description**

*Technical field*

The present invention relates to optical scanners in general, and to optical scanners using Risley pairs in particular.

*Background*

An optical scanner is a device by which an electromagnetic radiation beam can be scanned in different patterns over an area. Many optical scanners use a Risley pair for deviating an incident beam into desired directions. Risley pairs are well known in the art, and comprise two optical wedge prisms that can rotate independently in both direction and angular rate around an optical axis. For a description of rotating prism pairs, see for example Chapter 10.3.5 Rotating Prisms Scan in "The Infrared Handbook" by William L. Wolfe et al.

A single prism deviates an incident beam through an angle $\delta$. When the single prism is rotated around the optical axis of the incident beam, the deviated beam will trace out a cone, so that at the intersection of the deviated beam with a plane surface perpendicular to the optical axis, a circle will be traced out. By placing a second prism in series with the first prism, further deviation of the beam will occur. By rotating the two prisms in the same or opposite directions, at the same or different rotation rates, with or without an angular offset and by using the same or different prism angles $\alpha$, a great variety of scanning patterns can be obtained.

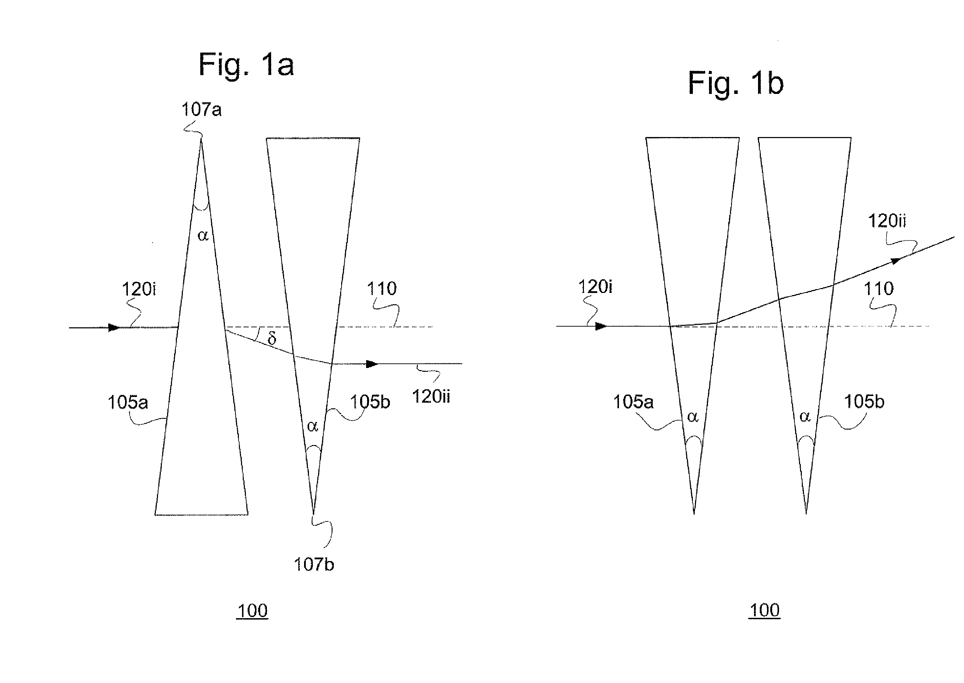

In Fig. 1a, a Risley pair 100 comprising a first prism 105a and a second prism 105b which are rotatable around an optical axis 110 is illustrated at a position where the first and second prisms 105a and 105b are aligned, with their apexes 107a and 107b, respectively, pointing in opposite directions. An incident beam 120i hits the first prism 105a of the Risley pair 100, and the beam 120i is deviated by the first prism 105a by a deviation angle $\delta$. However, in this position of the prisms 105a and 105b, the refraction of the beam 120 by the second prism 105b will compensate for the first deviation, and the exiting beam 120ii is parallel to the incident beam 120i. On the other hand, when the prisms 105a and 105b are aligned with their apexes 107a and 107b pointing in the same direction, the deviation of the beam 120 by the first prism 105 is enhanced by that of the second prism 105b, and the total deviation of the beam is at its maximum $2\delta$. This situation is illustrated in Fig. 1b.

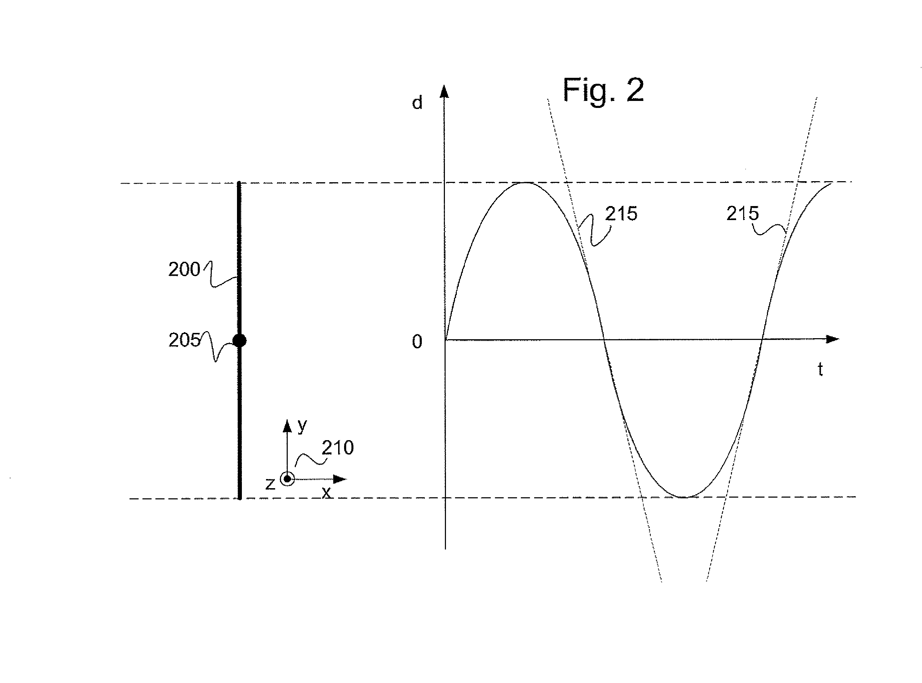

When two prisms 105a and 105b of the same prism angles $\alpha$ are counter-rotated around the optical axis 110 at the same angular rate, the deviation of the beam 120ii will trace out a part of a plane in a sweeping movement. Hence, on a plane surface perpendicular to the optical axis 110, a substantially straight line will be traced out. When the rotation is kept at a constant angular rate, the sweeping movement across the perpendicular plane surface will be a sinusoidal function of time. This is illustrated in Fig. 2, wherein the displacement $d$ of the deviated beam 120ii from the intersection of the optical axis 110 with the perpendicular plane surface is shown as a function of time $t$. To the left of the graph, illustrating the displacement as a function of time, the resulting straight line 200 is illustrated, where the intersection between the optical axis and the surface is denoted 205. The displacement $d$ obviously depends on the deviation $\delta$ and the distance from the Risley pair 100 to the scanned perpendicular surface. A system of orthogonal coordinates 210 is inset in Fig. 2, according to which the optical axis is parallel to the Z-axis, whereas the plane traced out by the deviated beam 120ii is parallel to the Y-Z-plane of the coordinate system 210. Note that for illustrating purposes the displacement $d$, rather than the deviation $\delta$, is shown in the drawings and is based on small amplitudes of the deviation $\delta$.

*Summary*

A problem to which the present invention relates is how to improve the time-dependency of a deviation of electromagnetic radiation caused by an optical scanner using Risley prism arrangements.

This problem is addressed by an optical scanner for providing a deviation of electromagnetic radiation wherein the deviation varies in time. The optical scanner comprises at least a first Risley pair and a second Risley pair. The optical elements of the first Risley pair are arranged to counter-rotate at a first rotation rate and the optical elements of the second Risley pair are arranged to counter-rotate at a second rotation rate in a manner so that a desired time dependency of the deviation of the radiation is obtained.

The problem is further addressed by a corresponding method of providing a deviation of electromagnetic radiation wherein the deviation varies in time.

By providing the possibility of determining the time-dependency of the deviation caused by a Risley prism arrangement, Risley prism arrangements can be used in optical applications where the time dependency of the deviation is critical.

The ratio of first rotation rate to the second rotation rate may advantageously correspond to the ratio of the angular frequency of the first to second terms of the Fourier series of a desired time dependency of the deviation. By using a ratio of 3/1 of the first to second rotation rates, a linear time-dependency of a deviation along a line may be obtained.

### *Brief description of the drawings*

For a more complete understanding of the present invention, and the advantages thereof, reference is made to the following description taken in conjunction with the accompanying drawings, in which:

Fig. 1a illustrates a Risley pair at a first angular position of rotation.

Fig. 1b illustrates a Risley pair at a second angular position of rotation.

Fig. 2 illustrates the displacement of the beam as a function of time for a Risley pair wherein the prisms counter-rotate at a constant angular rate.

Fig. 3 illustrates a LADAR comprising an optical scanner.

Fig. 4 schematically illustrates an embodiment of the inventive Risley prism arrangement.

Fig. 5a is a graph showing a displacement vs. time curve obtained for a first value of the ratio of the refractive powers of the Risley pairs in the Risley prism arrangement of Fig. 4.

Fig. 5b is a graph showing a displacement vs. time curve obtained for a second value of the ratio of the refractive powers of the Risley pairs in the Risley prism arrangement of Fig. 4.

Fig. 5c is a graph showing a displacement vs. time curve obtained for a third value of the ratio of the refractive powers of the Risley pairs in the Risley prism arrangement of Fig. 4.

Fig. 5d is a graph showing a displacement vs. time curve obtained for a fourth value of the ratio of the refractive powers of the Risley pairs in the Risley prism arrangement of Fig. 4.

Fig. 6a, 6b, 6c and 6d are graphs showing the displacement vs. time curve for a conventional Risley pair arranged to scan a beam along a straight line, wherein a straight line indicating 0.5 %, 1 %, 3 % and 7 % linearity, respectively, has been inset.

### *Detailed description*

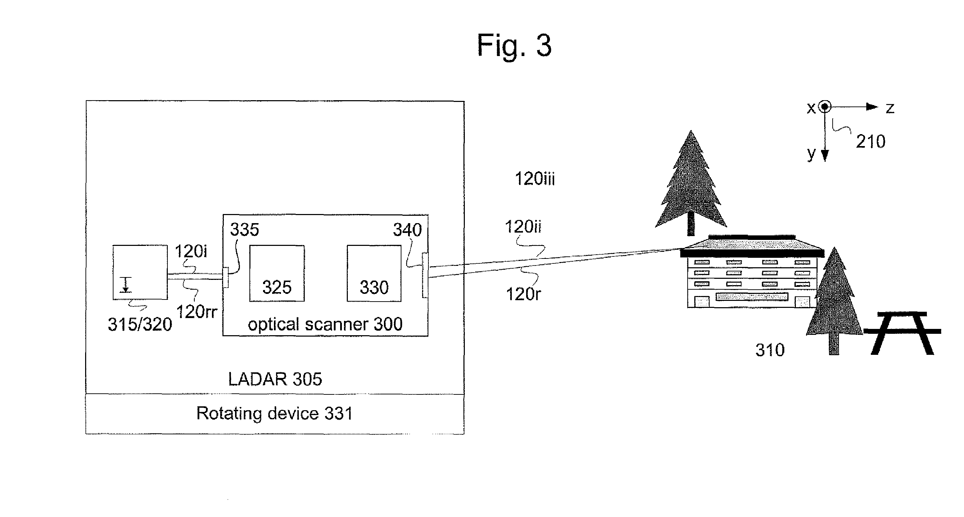

An optical scanner can for example be used to control the sweeping of a laser beam in a LAser Detecting And Ranging (LADAR) device. Fig. 3 illustrates an optical scanner 300 in a LADAR device 305 for three-dimensional scanning of area scene 310. The LADAR device 305 further comprises a laser source 315 emitting a laser beam 120, and a detector 320 for detecting a returning beam 120r that is reflected by the scanned scene 310. In Fig. 3, laser source 315 and detector 320 is illustrated as implemented in a combined laser source/detector unit 315/320, but they can alternatively be implemented in different units. The beam 120 of Fig. 3 is illustrated by use of different parts: the beam 120i that is incident to the optical scanner 300, the beam 120ii that has been deviated by the optical scanner 300, the beam 120r that has been reflected by an object in the scanned scene 310 and is incident to the optical scanner 300, and the beam 120rr that has been deviated by the optical scanner 300 and hence may be detected by the detector 320. The optical scanner 300 of LADAR 305 in Fig. 3 comprises an optical scanning device 325 for scanning the beam 120 in the Y-Z plane (cf Fig. 2). The optical scanner 325 further has a port 335 for letting in an incident beam 120i, and a port 340 for letting out a deviated beam 120ii. In a LADAR device 305 wherein a reflected beam 120r is entered into the detector 320 via the optical scanner 300, the port 340 can further be for letting in a reflected incident beam 120r, and port 335 can further be for letting out a deviated reflected beam 120rr. A sweeping movement in the X-direction can be accomplished for example by a scanner 330 working over a limited angle, and/or by a full-turn rotating arrangement 331 supporting the LADAR 305 of which the optical scanning device 325 forms a part.
In a LADAR device 305, as well as in many other applications of an optical scanner 300, it is often desired to scan a beam 120 in a manner so that the tracing rate of the beam 120 is constant over a surface perpendicular to the optical axis 110. For instance, by keeping the tracing rate constant, an even angular distribution of multiple laser footprints over the scanned scene 310 is obtained when the laser source 315 of LADAR 305 emits laser pulses with a constant rate.
In Fig 2, showing the displacement vs. time curve of a conventional Risley prism arrangement for producing scanning movement along a straight line, straight lines 215 have been inset in order to illustrate the time intervals wherein the displacement *d* is approximately a linear function of time, i.e. wherein the tracing rate is approximately constant. As can be seen in Fig. 2, the time periods wherein the tracing rate is approximately constant is only a part of the total scanning time. Depending on how strict the linearity requirements of the application are, a smaller or larger part of the total scanning time of a conventional Risley prism scanning arrangement cannot be used for scanning purposes.

For this reason, optical scanners 300 based on Risley pairs have traditionally not been extensively used in LADAR devices 305 for linear scanning. Instead, optical scanners based on for example an oscillating flat mirror, a rotating flat mirror, a rotating polygon with internal mirrors, a rotating or oscillating plane parallel plate or the like have been used. However, the amount of torque and stress in an oscillating scanning device is comparatively high, especially at high scanning frequencies, as is the power consumption of such devices.

According to the invention, the time dependency of the deviation of an incident beam 120 for a Risley prism arrangement can be varied by adding at least a second Risley pair 100 in series with a first Risley pair 100, and by counter-rotating the optical elements 105 of the first Risley pair at a first rotation rate and counter-rotating the optical elements 105 of the second Risley pair 100 at a different rotation rate.

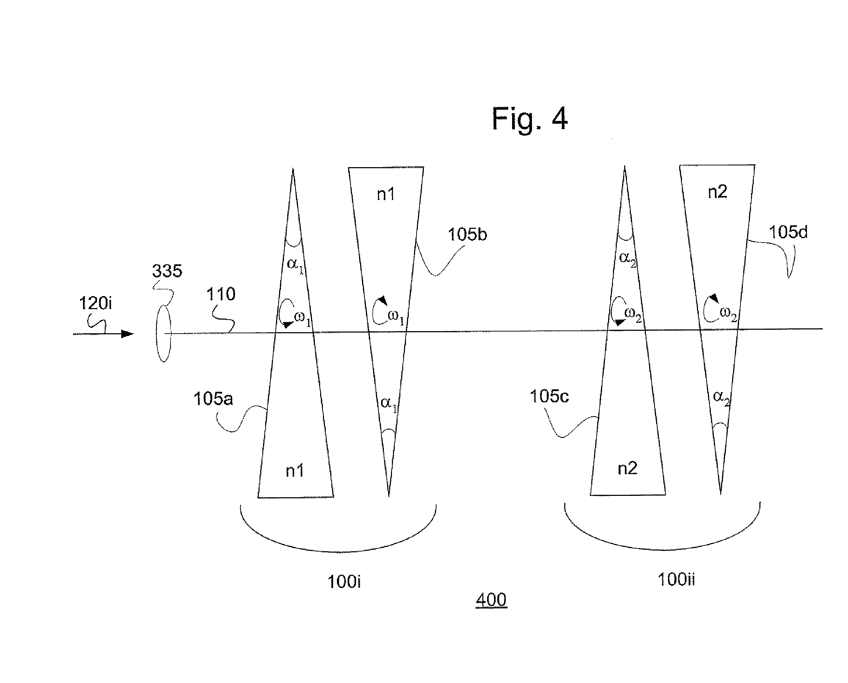

Such an inventive Risley prism arrangement 400 is illustrated in Fig. 4, wherein a first Risley pair 100i including two prisms 105a and 105b, and a second Risley pair 100ii including two prisms 105c and 105d, are placed in series along an optical axis 110. A port 335 for letting in an incident beam 120i is provided. The prisms 105a and 105b can rotate independently around the optical axis 110, as can the prisms 105c and 105d. The prisms 105a and 105b of the first Risley pair 100i are arranged to counter-rotate with a first angular frequency $\omega_1$, and the prisms 105a and 105b are arranged to counter-rotate with a second angular frequency $\omega_2$.

Any optical element 105 having beam deviating properties similar to wedge prisms can be used as elements 105 in a Risley pair 100, such as a Fresnel wedge or a diffractive optical element comprising an assembly of narrow slits or grooves, which can produce a large number of beams that can interfere to produce a deviated beam of an incident beam. In the following, the term "prism" is construed to include any optical element having suitable beam deviating properties.

By studying the Fourier series expression of a desired deviation vs. time function, indications can be obtained as to which relation between the rotational rates of the at least first and second Risley pairs 100i and 100ii, respectively, will give the desired time-dependency of the deviation.

In many applications, it would be advantageous if the deviation of the beam 120 as a function of time were of triangle shape. With a triangle wave shape of the deviation vs. time curve, a linear time dependency of the deviation $\delta$, and hence a constant movement rate of the beam 120 in the Y-Z-plane, would be obtained. The first terms of the Fourier series of a triangle wave are found in:

$$d(t) = A(\cos\omega t + \frac{1}{9}\cos 3\omega t + ...) \qquad (1),$$

where $\omega$ is an angular frequency, and *A* is an amplitude constant and a factor in defining the amplitude of the deviation $\delta$.

In one embodiment of the invention, an approximately triangle wave shaped time dependency of the deviation vs. time curve can be obtained by applying a first angular frequency $\omega_1$ to the first Risley pair 100i of the inventive Risley prism arrangement 400, and a second angular frequency $\omega_2$ to the second Risley pair 100ii, wherein the ratio *W* of the first angular frequency to the second angular frequency is 3/1 (or, alternatively, 1/3). Hence, by counter-rotating the prisms 105 of the first Risley pair 100i at a rotation rate which is 3 times (or 1/3 times) the rate at which the prisms 105 of the second Risley pair 100ii are counter-rotated, a movement of the deviated beam 120ii in the Y-Z plane that is approximately linear in time can be obtained when the ratio of the refractive powers of the first and second prism pairs has an advantageous value.

In relation (1), it can be seen that the first and second terms of the Fourier series of the triangle wave are in phase, so that when the first term is at its maximum value, so is the second term. This gives an indication that in order to obtain a linear time-dependency of the movement of the deviated beam 120ii, the rotation of the first and second Risley pairs 100i and 100ii should advantageously be synchronised in a manner so that at some point during a full rotation of the slower rotating pair, the four prisms 100a, 100b, 100c and 100d should be aligned with their respective apexes 107 pointing in the same direction. This direction corresponds to the Y-axis of the coordinate system 210, i.e. the direction in which the deviations of the beam 120ii from the optical axis 110 will occur. A phase shift between the rotation of the first and second Risley prism pairs 100i and 100ii will generally have a negative impact on the linearity of the time dependency, but a small phase shift may be acceptable providing that the contribution of the shift is within the tolerances of the application.

The ratio *k* of the refractive powers *R* of the prisms 100 of the first and second Risley pairs, respectively, will influence the shape of the time dependency of the deviation of the beam 120ii. A difference in refractive powers can advantageously be achieved by using refractive material of different refractive indices for the prisms 105 of the different Risley pairs 100i and 100ii, by using prisms 105 having different apex angles 107 in the different Risley pairs 100i and 100ii, or by a combination of the two. In the example illustrated in Fig. 4, all prisms 105 have the same apex angle 107, whereas the prisms 105a and 105b of the first Risley pair 100i have a refractive index $n1$, and the prisms 105c and 105d of the second Risley pair 100ii have a refractive index $n2$. The ratio of the refractive powers can be expressed as

$$k = \frac{R_1}{R_2},$$ wherein $R_1$ is the refractive power of the fastest rotating Risley pair and $R_2$ is the refractive power of the slower Risley pair.

The Fourier series of the triangle wave indicates, as seen in relation (1), that the ratio of the refractive powers of the faster rotating Risley pair to the slower rotating Risley pair should be approximately $\frac{1}{9}$ in order to obtain a time dependency of the deviation δ of triangle wave shape.

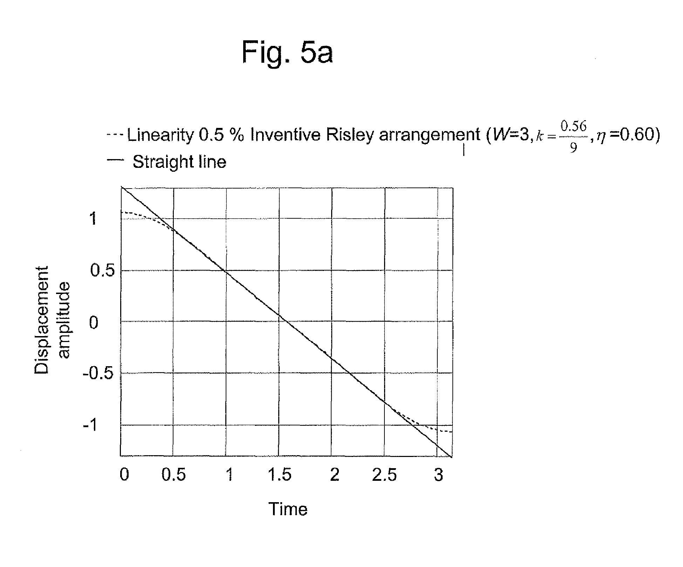

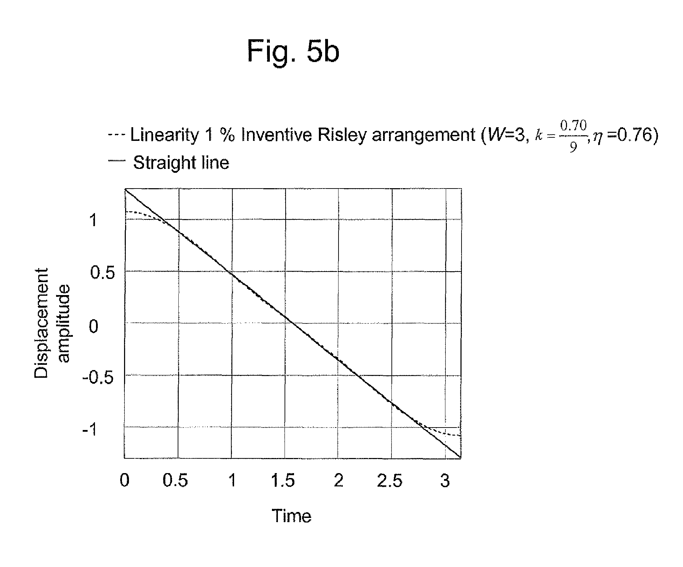

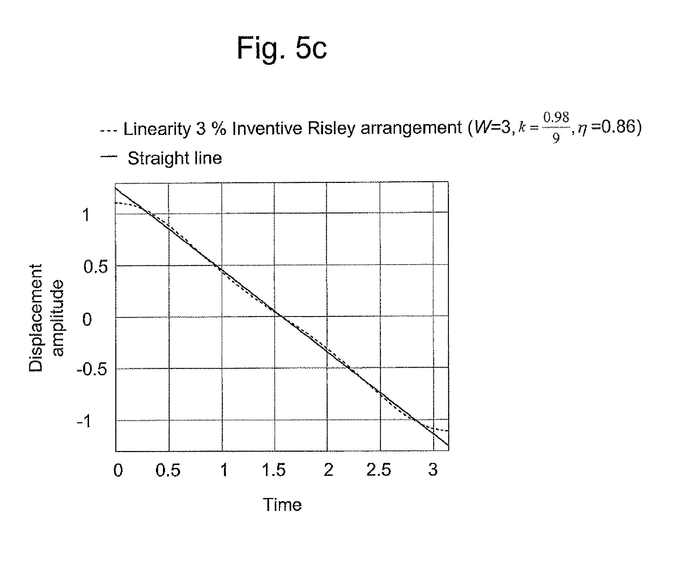

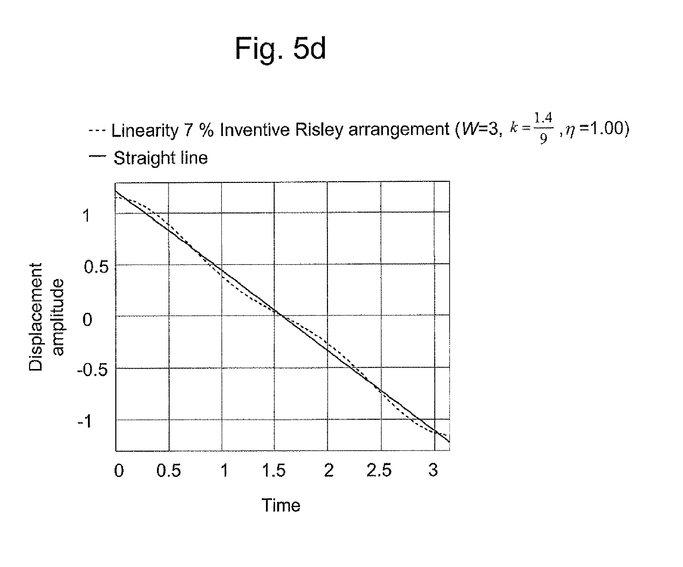

In Fig. 5, experimentally obtained graphs of the time dependency of the displacement $d$ is shown for three Risley prism arrangements 400 having different values of the ratio $k$ of refractive powers. In Fig. 5a, the ratio $k$ is $\frac{0.56}{9}$, Fig. 5b, the ratio $k$ is $\frac{0.7}{9}$, in Fig. 5c, the ratio $k$ is $\frac{0.98}{9}$ and in Fig. 5 d, the ratio $k$ is $\frac{1.4}{9}$. All graphs in Fig. 5 were obtained with $W = 3/1$, where $W$ is the ratio of the angular frequencies of the first and second Risley pairs 100i and 100ii. In each of the graphs, a straight line has been included in the graph, in order to illustrate the degree of linearity obtained for the different values of $k$.

The linearity can be further improved by adding a further Risley pair 100 to the Risley prism arrangement 400, wherein the prisms 105 of the third Risley pair counter-rotate at a third angular frequency in accordance with the third term of the Fourier series of the desired deviation vs. time dependency.

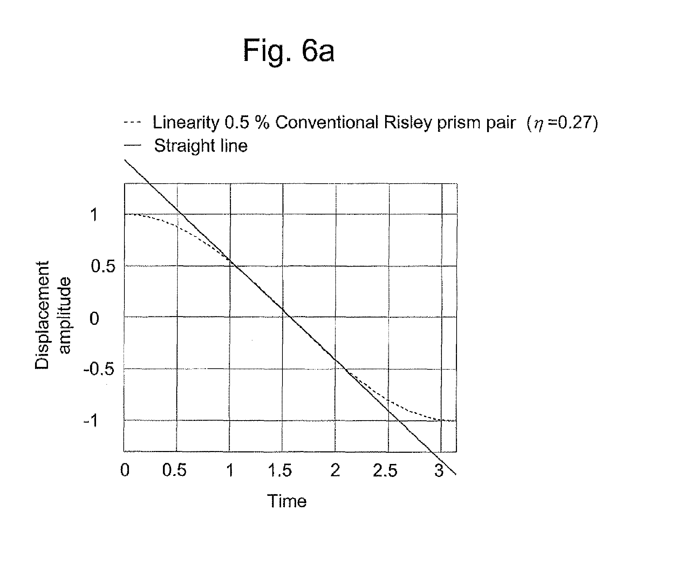

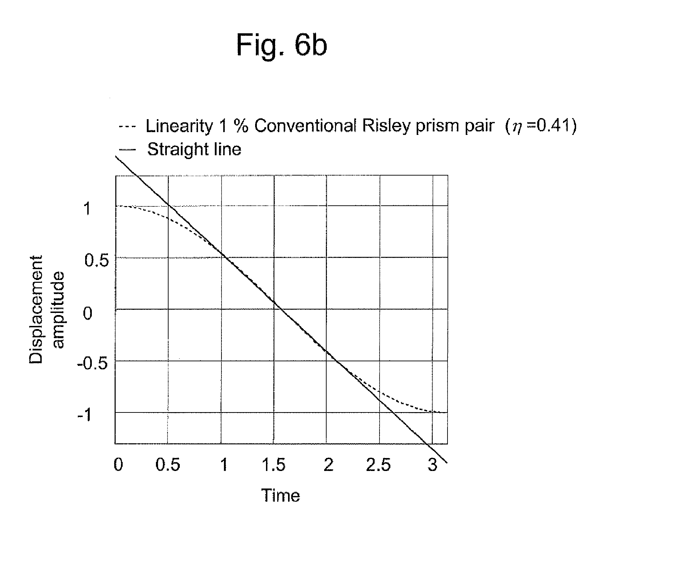

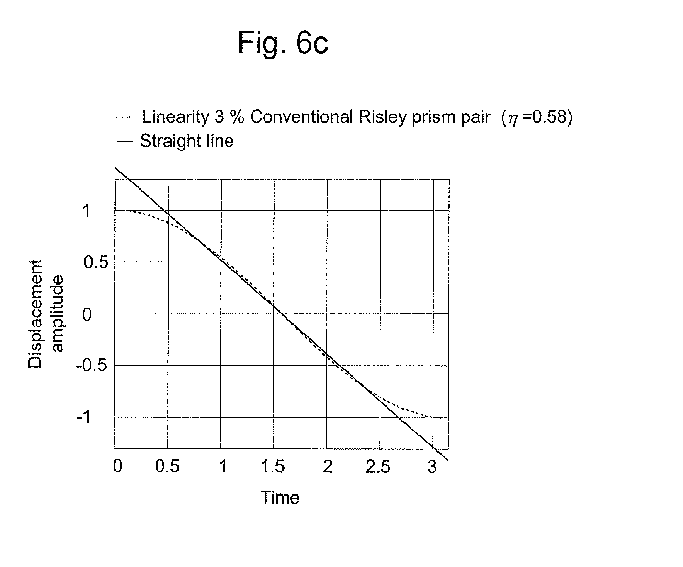

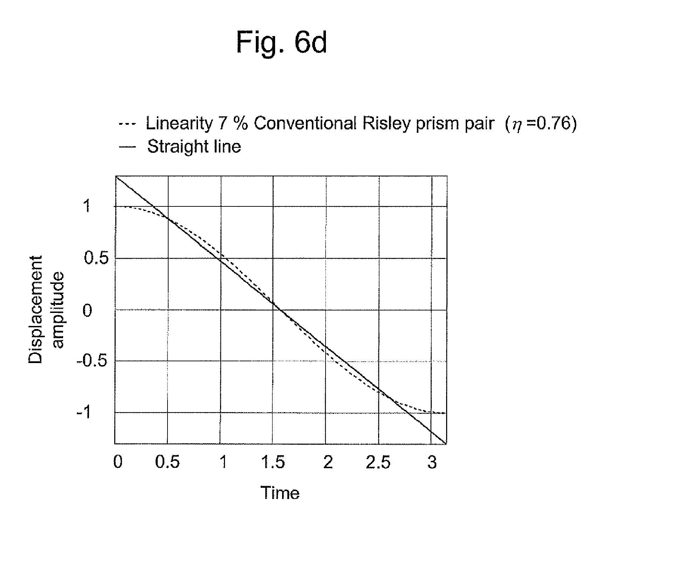

As a reference, the time dependency of the displacement $d$ of a conventional Risley pair 100 is illustrated in Figs. 6a, 6b, 6c and 6d (cf. Fig. 2), wherein a line representing 0.5 % linearity is inset in Fig. 6a, a line representing 1 % linearity is inset in Fig. 6b, a line representing 3 % linearity is inset in Fig. 6c, and a line representing 7 % linearity is inset in Fig. 6d.

An efficiency η of an optical scanning device 300 can be defined as the ratio of the useful part of the scanning time to total scanning time. The useful part of the scanning time is the time useful for the application in which the optical scanning device 300 is used. The efficiency η of a particular scanning device 300 is dependent on the requirements set by the application in which the scanning device 300 is used.

Table 1 provides a comparison of the efficiency η of a conventional Risley pair 100 and an inventive Risley prism arrangement 400 according to an embodiment of the invention, at different linearity requirements of the time-dependency of the deviation δ. The values presented for the inventive Risley prism arrangement 400 at the different linearity requirements 0.5 %, 1 %, 3 % and 7 % have been obtained for $k = \frac{0.56}{9}$, $k = \frac{0.7}{9}$, $k = \frac{0.98}{9}$, and $k = \frac{1.4}{9}$, respectively, and $W = 3/1$.

*Table 1. A comparison between the efficiency of a conventional Risley pair and that of a Risley prism arrangement according to an embodiment of the invention at different linearity requirements of the time dependency of the deviation δ.*

| | efficiency | | | |
|---|---|---|---|---|
| linearity requirement | 0.5 % | 1 % | 3 % | 7 % |
| conventional Risley prism pair | 0.27 | 0.41 | 0.58 | 0.76 |

(continued)

| | efficiency | | | |
| --- | --- | --- | --- | --- |
| inventive Risley arrangement | 0.60 ($k$=0.56/9) | 0.76 ($k$=0.70/9) | 0.86 ($k$=0.98/9) | 1.00 $k$=1.4/9 |

Hence, by replacing a conventional Risley pair 105 with an inventive Risley prism arrangement 400, the efficiency of an optical scanner 300 can be greatly improved in a scanning application where a linear movement of the output beam 120ii is required. In a LADAR application, the area scanned during a particular time period can thus be increased.

Since the Risley prism arrangement 400 can provide an approximately linear time dependency of the deviation of the beam 120 in the Y-Z-plane, the Risley prism arrangement 400 can advantageously be used as the optical scanning device 300 of a LADAR 305.

Compared to oscillating scanning devices conventionally used in an optical scanner 300 of a LADAR device 305, the use of a Risley prism arrangement 400 provides the advantage of a constant rotation rate of the mechanical parts of the optical scanner 300. Hence, the amount of torque and stress in the optical scanner 300 is kept at a low level. Furthermore, optical scanning performed by an optical scanner 300 wherein the mechanical parts rotate at constant rotation rates requires low power consumption, and a smaller motor is required, since no moments of inertia have to be accelerated or retarded. This is particularly important at high scanning frequencies, wherein the beam 120ii is made to move back and forth in the Y-Z-plane at a high rate.

In order to provide efficient rotation as well as synchronisation of the rotating parts of the Risley prism arrangement 400, it is advantageous to provide a mechanical coupling between the different prisms 105 in a manner so that the rotation of all the prisms 105 of the arrangement 400 is linked. This can for example be obtained by means of a common gear assembly. An electrical motor can advantageously be used to drive the rotational movement of the arrangement. Independent motor drivers can be used as an alternative to a single motor and gear trains.

The above description has been made in relation to an optical scanner 325 forming part of a LADAR device 305. However, the inventive Risley prism arrangement 400 will also be useful in other optical applications, such as in optical sensing devices with an optical detector (or an array of optical detectors) that is required to make a sweeping movement in order to detect electromagnetic radiation from different directions, or in applications wherein a beam 120 of electromagnetic radiation is swept over an area, but where no reflected beam 120r is detected.

Advantageously, the Risley pair 100 of the higher refractive power $R$ is placed nearest to the port 340 where electromagnetic radiation will enter/leave the optical scanner 325 at the widest range of angles, and the Risley pair 100 of the lower refractive power R is placed nearest to the port 335 where electromagnetic radiation will leave/enter the optical scanner 325 at the smallest angle. By arranging the Risley pairs 100 in this manner, the size of the prisms 105 can be smaller for a chosen maximum deviation δ compared to the opposite alternative.

Furthermore, the above description has been made in terms of a desired triangle wave time dependency of the deviation of the beam 120. As discussed above, the triangle wave time dependency is advantageous in many applications. However, the invention is not limited to the triangle wave, and by applying different ratios of the first angular frequency to the second angular frequency, other wave forms can be obtained.

One skilled in the art will appreciate that the present invention is not limited to the embodiments disclosed in the accompanying drawings and the foregoing detailed description, which are presented for purposes of illustration only, but it can be implemented in a number of different ways.

**Claims**

1. An optical scanner (300) for providing a deviation of electromagnetic radiation wherein the deviation varies in time, the optical scanner comprising at least a first Risley pair (100i) having a first pair of optical elements (105a, 105b) and a second Risley pair (100ii) having a second pair of optical elements (105c, 105d), wherein optical elements (105a, 105b) in the first Risley pair are arranged to counter-rotate at a first rotation rate; and optical elements (105c, 105d) of the second Risley pair are arranged to counter-rotate at a second rotation rate in a manner so that a desired time dependency of the deviation of the radiation is obtained.

2. The optical scanner of claim 1, wherein the rotation of the first and second Risley pairs is synchronized in a manner so that at some point during a full rotation of the slower rotating pair (100i; 100ii), the four optical elements (100a, 100b, 100c, 100d) are aligned.

3. The optical scanner of claim 1 or 2, wherein the ratio of first rotation rate to the second rotation rate corresponds to the ratio of the angular frequency of the first to second terms of the Fourier series of a desired time dependency of the deviation.

4.  The optical scanner of any one of the preceding claims, wherein the ratio of the first to second rotation rates is 3/1.

5.  The optical scanner of any of the preceding claims, wherein
the refractive power of the optical elements of the first Risley pair is different to the refractive power of the optical elements of the second Risley pair.

6.  The optical scanner of claim 5, wherein

the ratio of the refractive power of the optical elements of the first to second Risley pairs is less than or equal to $\dfrac{1.4}{9}$.

7.  The optical scanner of claim 6, wherein
the ratio of the refractive power of the optical elements of the first to second Risley pairs lies in the interval

$$[\dfrac{0.56}{9}; \dfrac{1.4}{9}].$$

8.  The optical scanner of any of the preceding claims, wherein
the optical elements of the first Risley pair are of a first refractive index;
the optical elements of the second Risley pairs are of a second refractive index;
and the first and second refractive indices are different.

9.  The optical scanner of any of the preceding claims, wherein
the optical elements are wedge prisms; and
an apex angle (107a, 107b) of the prisms of the first Risley pair is different to an apex angle (107c, 107d) of the prisms of the second Risley pair.

10. The optical scanner of any of claims 6 to 9, wherein
the optical scanner has a first port (335; 340) nearest to the first Risley pair for electromagnetic radiation to enter/leave the optical scanner and a second port nearest to the second Risley pair (340; 340) for electromagnetic radiation to leave/enter the optical scanner;
the first port is arranged to receive/transmit electromagnetic radiation at smaller angles than the second port; and
the refractive power of the first Risley pair is lower than the refractive power of the second Risley pair.

11. The optical scanner of any of the preceding claims, further comprising
drive means arranged to drive the rotation of the Risley pairs; and wherein
the first and second Risley pairs are coupled by means of gear means arranged so that a rotation of an optical element in a Risley pair causes a rotation of the optical elements in the other Risley pair.

12. The optical scanner of any of the preceding claims, further comprising
an optical sweeping mechanism (330) arranged to sweep the beam along a direction perpendicular to deviation of the electromagnetic radiation caused by the Risley pairs.

13. The optical scanner of any of the preceding claims, further comprising
a mechanical sweeping mechanism (331) arranged to sweep the beam along a direction perpendicular to deviation of the electromagnetic radiation caused by the Risley pairs.

14. A laser detecting and ranging device (305) comprising an optical scanner according to any one of the preceding claims.

15. A radiation sensing device comprising
a detector for detecting electromagnetic radiation; and
a scanner according to any one of claims 1-13, wherein
the scanner and detector are arranged so that electromagnetic radiation incident to the optical scanner is focused on the detector.

**16.** A radiation emitting device comprising an optical scanner according to any one of claims 1-13.

**17.** A method of providing a deviation of electromagnetic radiation wherein the deviation varies in time, the method comprises:

arranging a first and second Risley pair in the path of the electromagnetic radiation in a manner so that the first and second Risley pairs are aligned, the first and second Risley pairs having first and second pairs of optical elements (105a, 105b, 105c, 105d), respectively;
counter-rotating the optical elements of the first Risley pair at a first rotation rate;
counter-rotating the optical elements of the second Risley pair at a second rotation rate; wherein
the first and second rotation rates are selected in a manner so that a desired time-dependency of the deviation is achieved.

Fig. 1a

Fig. 1b

100

100

EP 1 986 032 A1

Fig. 2

# Fig. 3

# Fig. 4

EP 1 986 032 A1

# Fig. 5a

--- Linearity 0.5 % Inventive Risley arrangement $(W=3, k=\dfrac{0.56}{9}, \eta=0.60)$

— Straight line

# Fig. 5b

--- Linearity 1 % Inventive Risley arrangement ($W=3$, $k = \dfrac{0.70}{9}$, $\eta$ =0.76)

— Straight line

# Fig. 5c

--- Linearity 3 % Inventive Risley arrangement ($W=3, k = \dfrac{0.98}{9}, \eta = 0.86$)

— Straight line

# Fig. 5d

--- Linearity 7 % Inventive Risley arrangement ($W$=3, $k = \dfrac{1.4}{9}$, $\eta$ =1.00)

— Straight line

# Fig. 6a

- - - Linearity 0.5 % Conventional Risley prism pair ($\eta = 0.27$)
— Straight line

# Fig. 6b

--- Linearity 1 % Conventional Risley prism pair ($\eta$ =0.41)
— Straight line

# Fig. 6c

--- Linearity 3 % Conventional Risley prism pair $(\eta = 0.58)$
— Straight line

# Fig. 6d

--- Linearity 7 % Conventional Risley prism pair ($\eta$ =0.76)
— Straight line

# EP 1 986 032 A1

**European Patent Office**

**EUROPEAN SEARCH REPORT**

**Application Number**

EP 07 10 6944

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 23 33 774 A1 (EMI LTD) 10 January 1974 (1974-01-10) * page 2, last paragraph - page 7, last paragraph * * figures 1,2 * | 1-13,15, 17 | INV. G02B26/08 G02B26/10 F41G3/06 G01S17/89 |
| Y | | 14,16 | |
| Y | US 4 407 464 A (LINICK JAMES [US]) 4 October 1983 (1983-10-04) * column 4, line 12 - column 5, line 48 * * figures 1,3 * | 14,16 | |
| Y | WO 2004/099849 A (ELOP ELECTROOPTICS IND LTD [IL]; AMITAI YAAKOV [IL]) 18 November 2004 (2004-11-18) * page 6, last paragraph - page 8, last paragraph * * page 10, last paragraph - page 11, paragraph 2 * * figures 1,4 * | 14,16 | |
| A | US 4 079 230 A (MIYAUCHI TATEOKI ET AL) 14 March 1978 (1978-03-14) * figure 7 * * column 3, line 4 - column 5, line 10 * | 1-17 | **TECHNICAL FIELDS SEARCHED (IPC)** F41G G01S G02B |
| A | WO 92/03187 A (PHOENIX LASER SYSTEMS INC [US]) 5 March 1992 (1992-03-05) * page 9, paragraph 3 - page 10, paragraph 3 * * page 11, last paragraph - page 12, paragraph 1 * * figure 11 * | 1-17 | |

The present search report has been drawn up for all claims

| Place of search | Date of completion of the search | Examiner |
|---|---|---|
| Munich | 4 July 2007 | von Hentig, Roger |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

21

## ANNEX TO THE EUROPEAN SEARCH REPORT
## ON EUROPEAN PATENT APPLICATION NO.

EP 07 10 6944

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2007

| Patent document cited in search report | Publication date | Patent family member(s) | Publication date |
|---|---|---|---|
| DE 2333774 A1 | 10-01-1974 | NONE | |
| US 4407464 A | 04-10-1983 | DE 3279036 D1<br>EP 0084060 A1<br>WO 8300382 A1 | 20-10-1988<br>27-07-1983<br>03-02-1983 |
| WO 2004099849 A | 18-11-2004 | NONE | |
| US 4079230 A | 14-03-1978 | JP 1248761 C<br>JP 51052599 A<br>JP 59019798 B | 25-01-1985<br>10-05-1976<br>08-05-1984 |
| WO 9203187 A | 05-03-1992 | AU 651374 B2<br>AU 8434691 A<br>CA 2069895 A1<br>CN 1059096 A<br>EP 0496870 A1<br>JP 3168207 B2<br>JP 5508573 T<br>US 5391165 A | 21-07-1994<br>17-03-1992<br>23-02-1992<br>04-03-1992<br>05-08-1992<br>21-05-2001<br>02-12-1993<br>21-02-1995 |

EPO FORM P0459

For more details about this annex : see Official Journal of the European Patent Office, No. 12/82

**EP 1 986 032 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Rotating Prisms Scan. **WILLIAM L. WOLFE.** The Infrared Handbook